# EUROPEAN PATENT SPECIFICATION

(11) **EP 2 664 434 B1**
(45) Date of publication and mention of the grant of the patent: **05.10.2016**
(21) Application number: 12002659.6
(22) Date of filing: 17.04.2012
(51) Int. Cl.: B29C 45/26, B29L 31/00, B29C 45/16, B29C 45/00

(54) **Injection moulding method for forming a bottle crate, bottle crate and corresponding apparatus for obtaining such bottle crate**
Spritzformverfahren zum Formen einer Flaschenkiste, Flaschenkiste, und entsprechende Vorrichtung zum Erhalten einer solchen Flaschenkiste
Procédé de moulage par injection pour former une caisse à bouteilles, caisse à bouteilles et appareil correspondant permettant d'obtenir cette caisse à bouteilles

(43) Date of publication of application: 20.11.2013
(73) Proprietor: D.W. Plastics NV, 3740 Bilzen (BE)
(72) Inventor: Isenborghs, Françis, 1350 Jauche (BE)
(74) Representative: Benech, Frédéric

(56) References cited:
- EP-A1- 0 687 630
- EP-A1- 0 879 687
- EP-A1- 2 127 848
- EP-A2- 1 312 455
- DE-A1- 10 252 648
- DE-C1- 4 231 200
- GB-A- 465 234
- JP-A- S5 722 031
- JP-A- 11 090 961
- JP-A- 57 185 130
- US-A- 2 191 703
- US-A- 4 029 454
- US-A1- 2007 104 581
- US-B1- 6 358 456

## Description

The present invention concerns an injection moulding method for forming at least partially a bottle crate with molten plastic material including additive element, comprising the step of injecting in a mould through at least one injecting nozzle said molten plastic to form at least partially a panel of said bottle crate, wherein the molten plastic spreads in two opposite flows toward each other until at least a junction area.

It is also related to an injection moulding apparatus for forming such bottle crate and such bottle crate.

The invention is more particularly but not exclusively used for manufacturing beverage crates and for instance for bottle crates used by beverage industry, wherein overmoulding parts of the panels with a second layer of generally softer plastic is provided.

With such bi-components bottle crates, as well as with one component product, it is particularly advantageous to use additive elements or pigments (known as color masterbatche or additive masterbatches) mainly for esthetic reasons or for modifying various properties of the plastic material.

However the use of a metallic colouring pigment or of an additive masterbatche in injection moulding presents draw backs because in certain areas, due to the design of the injection process where two material flows meet each other and stop against each other, a dark flow line appears or many appear.

This is destroying partially the wanted esthetic aspect of the moulded part.

The probable reason for the appearance of dark flow lines is the fact that the particles in the metallic colour pigment and/or the additive element are disoriented during the flow.

When two flows meet together, it creates the dark flow lines.

It is therefore a main object of the present invention to provide an improved method, an improved apparatus and the corresponding obtained bottle crates to eliminate or reduce these dark flow lines in the areas where the material flow stops, in order to obtain a more esthetic looking product, at a low cost and in an easy way.

Another object of the invention is to avoid that the two material flows come together in a visible area of the product.

For this purpose the invention mainly proposes an injection moulding method for forming at least partially a bottle crate with molten plastic material including metallic colouring pigment, comprising the step of injecting in a mould through at least one injection nozzle said molten plastic to form at least partially a panel of said bottle crate, wherein the molten plastic spreads in two opposite flows toward each other until at least a visible junction area to provide an initial contact layer of molten plastic when said opposite flows meet each other, characterized in that it further comprises the step of canalising the flows at an extremity of said junction area towards an external overflow duct outside of the visible junction area, and filling said overflow duct with the molten plastic of said initial contact layer, for eliminating dark flow lines in said junction area.

The initial contact layer of the two material flows does not remain in the visible junction area of the product by moving it to an area which is not visible.

In other words, after forming the panel, the material flow will continue to flow into this overflow duct, collecting the dark flow line in the overflow duct which is no more appearing on the visible part of the panel.

Advantageously the initial contact layer of the two flows is moved to the overflow duct situated in a covered or hidden area of the crate.

By covered or hidden area one shall understand an area which is not visible from the outside of the crate by a user, or at least not directly visible while manipulating normally the bottle crate.

In another advantageous embodiment, the initial contact layer is moved to the overflow duct to form an excess part which is removed after curing.

Advantageously, the process therefore further comprises removing the bottle crate from the mould after curing and cutting away said excess part.

By cutting away the duct or excess part after curing of the injected crate, the product has an esthetic look because there are no dark flow lines visible anymore.

The flow may take a portion of a second to fill the overflow duct, depending of the volume of the bottle crate, of the molten plastic characteristics, of the dimension of the panels, the initial contact layer extent or line and the volume of the overflow duct and/or excess part or corresponding tank.

Advantageously, the excess part is formed in a cavity comprising a tank of a predetermined volume included in the mould nearby said junction area and connected to said junction area to form said duct.

In another advantageous embodiment the tank being connected to the panel via a narrow connecting link, the cutting away is provided by cutting said link and deflashing.

The bottle crate presents therefore a clean aspect without flash.

Advantageously, the predetermined volume is comprised between 1cm³ and 5cm³.

In an advantageous embodiment the bottle crate comprises a bottom wall and lateral walls, said lateral walls being at least partially covered by an external overmoulding coating, characterized in that such overmoulding coating is formed by the two opposite flows of said molten plastic material with the method as described above.

Advantageously the injection moulding method comprises injection of the molten plastic provided in two separate areas whereby two separated junction areas are provided on the same panel.

In an advantageous embodiment, the method comprises, for each panel of the crate, directing the first contact layer to two opposite hidden or to be cut areas disposed in the direction of the upper side and the lower side of the crate.

The invention further proposes an apparatus for injection moulding using the above described method.

It also proposes an apparatus for injection moulding for forming at least partially a bottle crate, comprising a supply device for molten plastic, mould panels and at least one injection nozzle to form at least partially a panel of said bottle crate within a cavity of at least one of said mould panels, whereby said molten plastic is injected in two opposite flows toward each other until a junction area to provide an initial contact layer of molten plastic when said opposite flows meet each other, characterised in that said mould panel comprises at least one overflow duct which is connected to said cavity at an extremity of said junction area to canalise and contain the initial contact layer.

In some advantageous embodiments, it is also proposed an apparatus including one and/or more of the following features:
- the overflow duct is situated in a covered or hidden area of the crate once injected and cured;
- the overflow duct comprises a tank for an excess part which is situated in an external part of the crate once injected and cured, said excess part to be removed after curing;
- the excess part being formed in a cavity, such cavity comprises a tank of a predetermined volume included in the mould nearby said junction area and connected to said junction area via a narrow connecting link to form said duct.
- the injection moulding apparatus comprises at least four mould panels forming the lateral walls of the bottle crate, said lateral walls being at least partially covered by an external overmoulding coating formed by the two opposite flows of said molten plastic material and said apparatus includes at least two nozzles for each mould panel, for injecting two separate areas per panel, whereby two separated junction areas are provided on the same panel connected to a respective overflow duct.

The invention also proposes a bottle crate manufactured by the above described method.

The present invention will be better understood from reading the following description of particular embodiments given by way of non-limiting example, with reference to the accompanying drawings, wherein:
Figures 1 to 4 show schematically the main steps of the method of the embodiment of the invention more particularly described here.
Figure 5 and 6 show in perspective two embodiments of a bottle crate obtained with the process of the invention, one with overflow ducts comprising excess parts before cutting (figure 5) and one with hidden areas (figure 6).
Figure 7 shows a panel of a moulding apparatus according to the invention to create one panel of the crate of figure 5.

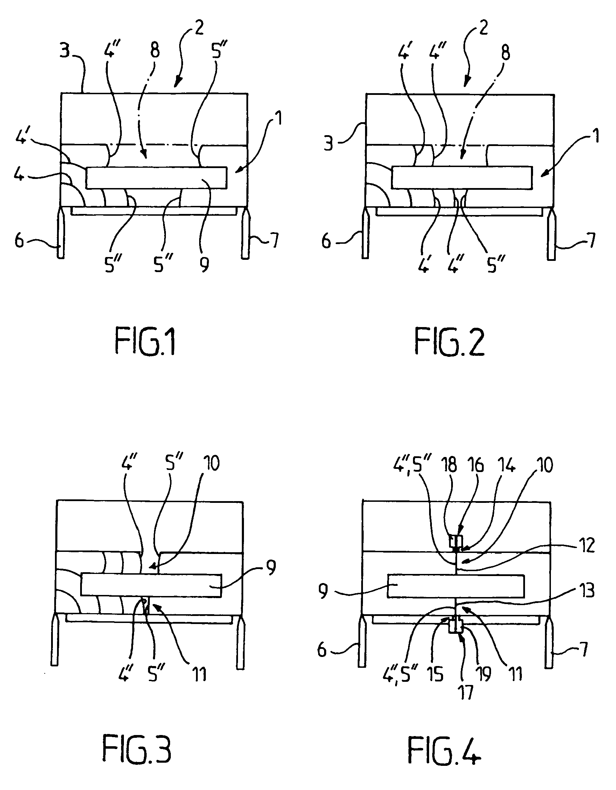

Figure 1 to figure 4 shows in lateral view and schematically the external surface 1 of a lateral panel 2 of a bottle crate, as it is formed within a mould panel 3.

More particularly the molten plastic (progressing front waves 4, 4', 4"... and 5, 5', 5"...) is injected through two separate and laterally opposed nozzles 6 and 7 in a manner known per se, in a cavity 8, for instance disposed around a central block 9 in the mould panel, to form ultimately after curing a hole in the lateral panel of the crate.

The injection moulding method comprises the step of injecting a molten plastic material such as polyethylene plastic including masterbatches. Masterbatches are solid or liquid additives for plastic used for coloring plastic (color masterbatch) or importing other properties to plastic (additive masterbatch).

Among other, additive masterbatches modify various properties of the base plastic, such as the ultraviolet light resistance, flame retardant effect, anti-static, strength, anti-slip, anti-microbial etc...

According to the method of an embodiment of the invention the molten plastic material is pushed progressively inside the cavity 8 in two opposite flows (waves 4, 4', 4" and waves 5, 5', 5") towards two visible junction areas 10, 11 respectively disposed in front of each of the two longitudinal sides of the parallelepipedic block 9, to provide an initial contact front wave or layer 12, 13 when the opposite flows meet and/or contact each other.

Upon such contact, the method comprises then the step of canalizing of, or directing, the flow at an extremity 14, 15 of such respective junction area 10, 11 towards and/or in an external overflow duct 16, 17 outside of the corresponding visible junction area, (i.e. on the figures above or beside such area).

In this embodiment the overflow duct comprises an excess part comprising a tank 18, 19 of a predetermined volume, for instance 5 cm³, connected to the junction area through a narrow link (a small or two small cylindrical tubes for instance provided in the mould panel) content of which can be cut off after curing of the crate.

In the following description, the same numeral of reference will be used for designating the same elements or similar one.

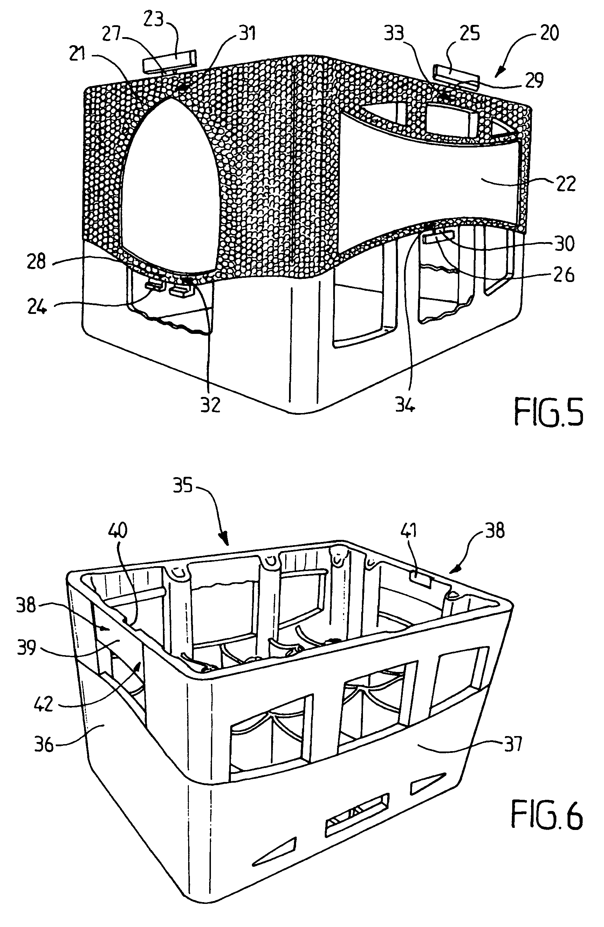

Figure 5 shows a bottle crate 20 having four lateral panels 21, 22, opposite and identical two by two.
It comprises before cutting on each corresponding panel, respectively two excess parts 23, 24 and 25, 26 formed at each extremity 27, 28 and 29, 30 of the visible junction area which is filled by the molten plastic of the initial contact layer.

The excess parts 23, 24, 25, 26 are then cut in order to obtain the clean bottle crate of the invention without dark lines in the visible junction areas.

Figure 6 shows another embodiment of a bottle crate 35, having partial panel 36, 37, said partial panel 36 presenting a handle 38 covered by a coating 39 in soft plastic material with metallic coloring pigment.

Here the initial contact layer for the two flows is moved to the overflow duct receiving the excess part 40, 41 situated in a covered or hidden area not visible because behind the external face 42 of the top part of the handle.

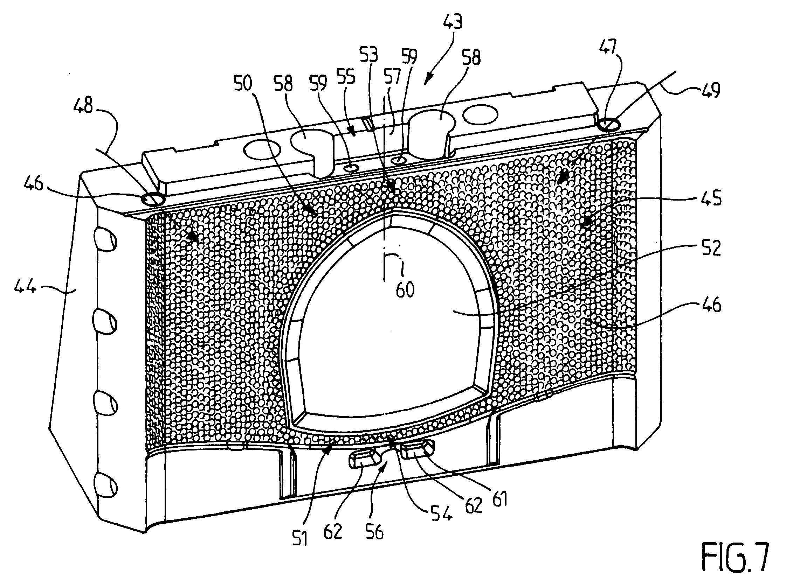

Figure 7 shows a panel 43 part of a moulding apparatus according to an embodiment of the invention which comprises four such types of moulding panels for forming the external faces of the panel 21 of the bottle crate of figure 5.

The moulding panel 43 comprises a metallic external wall 44 having a general planar cavity 45 for forming a granulated surface 46 for covering and/or overmoulding by coating a structural part of the bottle crate (see figure 5).

The moulding panel comprises two injecting holes or nozzles 46, 47 for injecting in the cavity 45 two opposite flows (arrow 48, 49) of molten plastic material, for injecting two separate areas 50 and 51 per panel, above and below a central block 52 (here substantially circular), whereby two separated junction areas 53 and 54 are provided on the same panel.

The mould panel further comprises two corresponding overflow ducts 55 and 56. One duct 55 comprises a parallelepiped cavity 57, (closed by a corresponding second mould panel (not shown) inserted in two lateral connecting holes 58 to cooperate with corresponding connecting pins (not shown) of said second mould panel.

The cavity 57 is for instance connected to the planar cavity 45 by two small cylindrical holes 59 disposed at a small distance (inferior to 1 or 2 mm) to the hypothetic central line 60 (in phantom line) of the visible junction area 53.

The other duct 56 is formed for instance differently by a cavity 61 having two small chambers 62 connected to said planar cavity 45 by a central link, easy to cut.

It will now be described the manufacturing of a bottle crate according to the method of the invention more particularly developed here above.

This method comprises a first step of manufacturing the bottle crate main and interior structure in a way known per se.

The bottle crate, duly cured is then inserted in a second mould comprising moulding panels as above described for injection of an overmoulding surface for instance (see figure 5 and 7) on each of the lateral panels of the crate.

This molten plastic spreads (see figures 1-4) until the two flows meet each other, in a relevant time, (i.e. norally in the regular process, less than 1 minute).

The plastic then overflows in the external overflow ducts formed by cavities 55 and 56, which astonishingly make the black lines otherwise appearing in the prior art, disappears.

The bottle crate is then unmoulded, the excess parts 23, 24, 25 26 being then cut away and prepared to avoid any flashing on the cut surfaces, to provide a clean and ameliorated bottle crate.

Additional advantages and modifications will readily occur to the man skilled in the art. The present invention in this further respect is not limited to the specific details, representative apparatus and illustrated examples shown and described here above.

For instance it also includes the use of different shape of panels, which can also, for instance not be limited to two inserting nozzles.

## Claims

1. An injection moulding method for forming at least partially a bottle crate (20, 35) with molten plastic material including additive elements, comprising the step of injecting in a mould (3, 43) through at least one injection nozzle (6, 7 ; 59) said molten plastic to form at least partially a panel (2; 21, 22; 36, 37) of said bottle crate, wherein the molten plastic spreads in two opposite flows (4, 4', 4", ... ; 5, 5', 5") toward each other until at least a visible junction area (10, 11 ; 53, 54) to provide an initial contact layer (12, 13) of molten plastic in a front wave relationship when said opposite flows meet each other, **characterized in that** it further comprises the step of canalising the flows at an extremity (14, 15) of said junction area towards an external overflow duct (16, 17 ; 55, 56) outside of the visible junction area, and filling said overflow duct with the molten plastic of said initial contact layer, for eliminating dark flow lines in said junction area, the initial contact layer of the two flows being moved to the overflow duct situated in a covered or hidden area of the crate, and/or forming an excess part (23, 24, 25, 26) which is removed after curing **in that** the excess part is formed in a cavity (57, 61) comprising a tank (18, 19) of a predetermined volume included in the mould nearby said junction area and connected to said junction area to form said duct and
**in that** said crate comprising a bottom wall and lateral walls, said lateral walls are at least partially covered by an external overmoulding coating (39) formed by the two opposite flows (4, 4', 4", 5, 5', 5") of said molten plastic material.

2. The injection moulding method according to claim 1, **characterized in that** the tank being connected to the panel via a narrow connecting link (59) it comprises the step of cutting away the content of said link after curing and deflashing said cutting, whereby the bottle crate presents a clean aspect.

3. The injection moulding method according to claim 2, **characterised in that** the predetermined volume is comprised between 1 cm3 and 5 cm3.

4. The injection moulding method according to any of the preceding claims, **characterised in that** injunction is provided in two separated area whereby two separated junction areas (53, 54) are provided on the same panel.

5. The injection moulding method according to claim 4, **characterized in that** for each panel of the crate, it comprises the step of directing the first contact layer to two opposite hidden or to be cut area disposed in the direction of the upper side and the lower side of the crate.

6. An injection moulding apparatus for forming at least partially a bottle crate, comprising a supply device for molten plastic, mould panels (3, 43) and at least one injection nozzle (6, 7 ; 46, 47) to form at least partially a panel of said bottle crate within a cavity (8) of at least one of said mould panels, whereby said molten plastic is injected in two opposite flows (48, 49) toward each other until a junction area (53, 54) to provide an initial contact layer of molten plastic when said opposite flows meet each other, **characterised in that** said mould panel comprises at least one overflow duct (55, 56) which is connected to said cavity at an extremity of said junction area to canalise and contain the initial contact layer, the overflow duct being situated in a covered or hidden area of the crate once injected and cured, And/or the overflow duct comprising a tank (18, 19) for an excess part which is situated in an external part of the crate once injected and cured, said excess part to be removed after curing **in that** the excess part being formed in a cavity (61), such cavity comprises a tank of a predetermined volume included in the mould nearby said junction area and connected to said junction area via a narrow connecting link (59) to form said duct, and **in that** it comprises at least four mould panels (43) forming the lateral walls of the bottle crate, said lateral walls being at least partially covered by an external overmoulding coating formed by the two opposite flows of said molten plastic material, and **in that** it includes at least two nozzles for each mould panel, for injecting two separate areas per panel, whereby two separated junction areas are provided on the same panel connected to a respective overflow duct.

7. A bottle crate having at least a panel obtained from injected molten plastic, said molten plastic being injected in two opposite flows toward each other until a junction area to provide an initial contact layer of molten plastic when said opposite flows meet each other,
**characterized in that** said junction area is deprived of any dark flow lines and is arranged to be connected to a portion of predetermined volume via a narrow connecting link to be cut,
and **in that** it is formed according to the method corresponding to any of claims 1 to 5.

## Patentansprüche

1. Spritzformverfahren zum mindestens teilweisen Formen einer Flaschenkiste (20, 35) mit geschmolzenem Kunststoffmaterial einschließlich von Zusatzelementen, umfassend den Schritt der Injektion in eine Gussform (3, 43) durch mindestens eine Einspritzdüse (6, 7; 59) des geschmolzenen Kunststoffs, um mindestens teilweise eine Platte (2; 21, 22; 36, 37) der Flaschenkiste zu formen, wobei sich der geschmolzene Kunststoff in zwei zueinander entgegengesetzten Strömen (4, 4', ...; 5, 5', 5") bis zu mindestens einem sichtbaren Vereinigungsbereich (10, 11; 53, 54) ausbreitet, um eine initiale Kontaktschicht (12, 13) des geschmolzenen Kunststoffs in einer Frontalwellenbeziehung bereitzustellen, wenn die entgegengesetzten Ströme aufeinandertreffen, **dadurch gekennzeichnet, dass** es weiterhin den Schritt der Kanalisierung der Ströme an einem Ende (14, 15) des Vereinigungsbereichs in Richtung zu einer äußeren Überlaufleitung (16, 17; 55, 56) außerhalb des sichtbaren Vereinigungsbereichs und des Befüllens der Überlaufleitung mit dem geschmolzenen Kunststoff der initialen Kontaktschicht zur Beseitigung dunkler Strömungslinien in dem Vereinigungsbereich, wobei die initiale Kontaktschicht der beiden Ströme zur Überlaufleitung bewegt wird, die in einem verdeckten oder verborgenen Bereich der Kiste angeordnet ist, und/oder des Bildens eines Überschussteils (23, 24, 25, 26), das nach dem Härten dadurch entfernt wird, dass das Überschussteil in einem Hohlraum (57, 61) geformt wird, der ein Reservoir (8, 19) eines in der Gussform in der Nähe des Vereinigungsbereichs mitumfassten und mit dem Vereinigungsbereich verbundenen vorbestimmten Volumens umfasst, um die Leitung zu bilden, umfasst, und
dadurch, dass die Kiste eine Bodenplatte und Seitenwände umfasst, wobei die Seitenwände mindestens teilweise mit einem äußeren Umspritzüberzug (39) bedeckt sind, der durch die beiden entgegengesetzten Ströme (4, 4', 4", 5, 5', 5") des geschmolzenen Kunststoffmaterials geformt wird.

2. Spritzformverfahren nach Anspruch 1, **dadurch gekennzeichnet, dass** es, wenn das Reservoir mit der Platte über ein schmales Verbindungszwischenstück (59) verbunden ist, den Schritt des Abschneidens des Inhalts des Zwischenstücks nach dem Härten und des Entgratens des Schnitts umfasst, wodurch die Flaschenkiste ein ansprechendes Aussehen erhält.

3. Spritzformverfahren nach Anspruch 2, **dadurch gekennzeichnet, dass** das vorbestimmte Volumen zwischen 1 cm³ und 5 cm³ liegt.

4. Spritzformverfahren nach einem der vorangehenden Ansprüche, **dadurch gekennzeichnet, dass** die Verfugung in zwei getrennten Bereichen vorgesehen ist, wodurch zwei getrennte Vereinigungsbereiche (53, 54) auf der gleichen Platte vorgesehen sind.

5. Spritzformverfahren nach Anspruch 4, **dadurch gekennzeichnet, dass** es für jede Platte der Kiste den Schritt des Lenkens der ersten Kontaktschicht hin zu zwei entgegengesetzten verborgenen oder zu abschneidenden Bereichen umfasst, die in Richtung der oberen Seite und der unteren Seite der Kiste angeordnet sind, umfasst.

6. Spritzformvorrichtung zum mindestens teilweisen Formen einer Flaschenkiste, umfassend eine Zufuhrvorrichtung für geschmolzenen Kunststoff, Gussformplatten (3, 43) und mindestens eine Einspritzdüse (6, 7; 46, 47), um mindestens teilweise eine Platte der Flaschenkiste in einem Hohlraum (8) von mindestens einer der Gussformplatten zu formen, wobei der geschmolzene Kunststoff in zwei zueinander entgegengesetzten Strömen (48, 49) bis zu einem Vereinigungsbereich (53, 54) injiziert wird, um eine initiale Kontaktschicht von geschmolzenem Kunststoff bereitzustellen, wenn die entgegengesetzten Ströme aufeinandertreffen, **dadurch gekennzeichnet, dass** die Gussformplatte mindestens eine Überlaufleitung (55, 56) umfasst, die mit dem Hohlraum an einem Ende des Vereinigungsbereichs verbunden ist, um die initiale Kontaktschicht zu kanalisieren und aufzunehmen, wobei die Überlaufleitung in einem verdeckten oder verborgenen Bereich der Kiste nach Spritzformen und Härten angeordnet ist, und/oder die Überlaufleitung ein Reservoir (18, 19) für ein Überschussteil umfasst, das in einen äußeren Teil der Kiste nach Spritzformen und Härten angeordnet ist, wobei das Überschussteil nach dem Härten dadurch entfernt wird, dass das Überschussteil in einem Hohlraum (61) geformt wird, ein solcher Hohlraum ein Reservoir eines in der Gussform in der Nähe des Vereinigungsbereichs mitumfassten und mit dem Vereinigungsbereich über ein schmales Verbindungselement (59) verbundenen vorbestimmten Volumens umfasst, um die Leitung zu bilden, und dadurch, dass es mindestens vier Gussformplatten (43) umfasst, die die Seitenwände der Flaschenkiste bilden, wobei die Seitenwände mindestens teilweise mit einem äußeren Umspritzüberzug bedeckt sind, der durch die beiden entgegengesetzten Ströme des geschmolzenen Kunststoffmaterials geformt wird, und dadurch dass sie mindestens zwei Düsen für jede Formplatte zum Injizieren von zwei getrennten Bereichen pro Platte umfasst, wodurch zwei getrennte Vereinigungsbereiche auf der gleichen Platte, die jeweils mit einer Überlaufleitung verbunden sind, bereitgestellt werden.

7. Flaschenkiste mit mindestens einer Platte, die aus spritzgegossenem geschmolzenem Kunststoff erhalten wird, wobei der geschmolzene Kunststoff in zwei zueinander entgegengesetzten Strömen bis zu einem Vereinigungsbereich injiziert wird, um eine initiale Kontaktschicht von geschmolzenem Kunststoffs bereitzustellen, wenn die entgegensetzten Ströme aufeinandertreffen,
**dadurch gekennzeichnet, dass** der Vereinigungsbereich von sämtlichen dunklen Strömungslinien frei ist und angeordnet ist, um mit einem Teil von vorbestimmtem Volumen über ein schmales Zwischenelement, das ausgeschnitten wird, verbunden zu sein,
und dadurch, dass sie nach dem Verfahren nach einem der Ansprüche 1 bis 5 geformt wird.

## Revendications

1. Procédé de moulage par injection pour former au moins partiellement une caisse à bouteilles (20, 35) avec un matériau plastique fondu comprenant des éléments additifs, comprenant l'étape de l'injection dans un moule (3, 43) à travers au moins une buse d'injection (6, 7 ; 59) dudit plastique fondu pour former au moins partiellement un panneau (2 ; 21, 22 ; 36, 37) de ladite caisse à bouteilles, dans lequel le matériau fondu se répand dans deux flux opposés (4, 4', 4", ... ; 5, 5', 5'') l'un vers l'autre jusqu'à au moins une zone de jonction visible (10, 11 ; 53, 54) pour fournir une couche de contact initiale (12, 13) dudit plastique fondu dans une relation d'onde avant lorsque lesdits flux opposés se rencontrent, **caractérisé en ce qu'**il comprend en outre l'étape de la canalisation des flux à une extrémité (14, 15) de ladite zone de jonction vers un conduit de trop-plein externe (16, 17 ; 55, 56) à l'extérieur de la zone de jonction visible, et le remplissage dudit conduit de trop-plein avec le plastique fondu de ladite couche de contact initiale, pour éliminer des lignes de flux sombres dans ladite zone de jonction, la couche de contact initiale des deux flux étant déplacée vers le conduit de trop-plein situé dans une zone couverte ou cachée de la caisse, et/ou la formation d'une partie d'excès (23, 24, 25, 26) qui est enlevée après durcissement, **en ce que** la partie d'excès est formée dans une cavité (57, 61) comprenant un réservoir (18, 19) d'un volume prédéterminé inclus dans le moule à proximité de ladite zone de jonction et raccordé à ladite zone de jonction pour former ledit conduit et
**en ce que** ladite caisse comprend une paroi inférieure et des parois latérales, lesdites parois latérales sont au moins partiellement recouvertes d'un revêtement de surmoulage externe (39) formé par les deux flux opposés (4, 4', 4", 5, 5', 5") dudit matériau plastique fondu.

2. Procédé de moulage par injection selon la revendication 1, **caractérisé en ce que**, le réservoir étant raccordé au panneau par l'intermédiaire d'une liaison de raccordement étroite (59), il comprend l'étape du découpage du contenu de ladite liaison après durcissement et ébarbage de ladite coupure, de telle manière que la caisse à bouteilles présente un aspect propre.

3. Procédé de moulage par injection selon la revendication 2, **caractérisé en ce que** le volume prédéterminé est compris entre 1 cm³ et 5 cm ³

4. Procédé de moulage par injection selon l'une quelconque des revendications précédentes, **caractérisé en ce qu'**une injection est fournie dans deux zones séparées de telle manière que deux zones de jonction séparées (53, 54) soient fournies sur le même panneau.

5. Procédé de moulage par injection selon la revendication 4, **caractérisé en ce que**, pour chaque panneau de la caisse, il comprend l'étape de la direction de la première couche de contact vers deux zones opposées cachées ou à découper disposées dans le sens du côté supérieur et du côté inférieur de la caisse.

6. Appareil de moulage par injection pour former au moins partiellement une caisse à bouteilles, comprenant un dispositif d'alimentation de plastique fondu, des panneaux de moule (3, 43) et au moins une buse d'injection (6, 7 ; 46, 47) pour former au moins partiellement un panneau de ladite caisse à bouteilles à l'intérieur d'une cavité (8) d'au moins l'un desdits panneaux de moule, de telle manière que ledit plastique fondu soit injecté dans deux flux opposés (48, 49) l'un vers l'autre jusqu'à une zone de jonction (53, 54) pour fournir une couche de contact initiale de plastique fondu lorsque lesdits flux opposés se rencontrent, **caractérisé en ce que** ledit panneau de moule comprend au moins un conduit de trop-plein (55, 56) qui est raccordé à ladite cavité à une extrémité de ladite zone de jonction pour canaliser et contenir la couche de contact initiale, le conduit de trop-plein étant situé dans une zone couverte ou cachée de la caisse après injection et durcissement, et/ou le conduit de trop-plein comprenant un réservoir (18, 19) pour une partie d'excès qui est située dans une partie externe de la caisse après injection et durcissement, ladite partie d'excès devant être enlevée après durcissement, **en ce que** la partie d'excès est formée dans une cavité (61), ladite cavité comprend un réservoir d'un volume prédéterminé inclus dans le moule à proximité de ladite zone de jonction et raccordé à ladite zone de jonction par l'intermédiaire d'une liaison de raccordement étroite (59) pour former ledit conduit, et **en ce qu'**il comprend au moins quatre panneaux de moule (43) formant les parois latérales de la caisse à bouteilles, lesdites parois latérales étant au moins partiellement recouvertes d'un revêtement de surmoulage externe formé par les deux flux opposés dudit matériau plastique fondu, et **en ce qu'**il comprend au moins deux buses pour chaque panneau de moule, pour injecter deux zones distinctes par panneau, de telle manière que deux zones de jonction séparées soient fournies sur le même panneau raccordé à un conduit de trop-plein respectif.

7. Caisse à bouteilles comportant au moins un panneau obtenu à partir d'un plastique fondu injecté, ledit plastique fondu étant injecté dans deux flux opposés l'un vers l'autre jusqu'à une zone de jonction pour fournir une couche de contact initiale de plastique fondu lorsque lesdits flux opposés se rencontrent,
**caractérisée en ce que** ladite zone de jonction est dépourvue de lignes de flux sombres et est agencée pour être raccordée à une portion de volume prédéterminé par l'intermédiaire d'une liaison de raccordement étroite à découper,
et **en ce qu'**elle est formée selon le procédé correspondant à l'une quelconque des revendications 1 à 5.
